(19) Europäisches Patentamt
European Patent Office
Office européen des brevets

(11) Publication number: 0 497 277 A2

(12) # EUROPEAN PATENT APPLICATION

(21) Application number: 92101353.8

(51) Int. Cl.[5]: C08L 83/04, C08K 5/54

(22) Date of filing: 28.01.92

(30) Priority: 29.01.91 JP 27921/91

(43) Date of publication of application: 05.08.92 Bulletin 92/32

(84) Designated Contracting States: DE FR GB

(71) Applicant: Dow Corning Toray Silicone Company, Limited
Mitsui Bldg. No. 6, 2-3-16, Nihonbashi-Muromachi, Chuo-Ku
Tokyo 103(JP)

(72) Inventor: Okawa, Tadashi
6, 1-chome, Yushudai Nishi
Ichihara-shi, Chiba Prefecture(JP)
Inventor: Nakanishi, Junji
6, 1-chome, Yushudai Nishi
Ichihara-shi, Chiba Prefecture(JP)

(74) Representative: Spott, Gottfried, Dr.
Spott Weinmiller & Partner
Sendlinger-Tor-Platz 11
W-8000 München 2(DE)

(54) **Silicone rubber composition.**

(57) A silicone rubber composition which after curing has an excellent resistance to repetitive deformation (bending, stretching) comprises (A) organopolysiloxane having the following general formula $R_aSiO_{(4-a)/2}$ wherein R is a monovalent hydrocarbon group and a is a number with a value of 1.90 to 2.05, (B) reinforcing filler, (C) organooligosiloxane which contains in each molecule from 2 to 10 silicon atoms, at least 1 silicon-bonded alkenyl group and at least 2 silicon-bonded hydrolyzable groups, and (D) curing catalyst.

EP 0 497 277 A2

The present invention relates to a silicone rubber composition, and, more particularly, relates to a silicone rubber composition which after curing displays an excellent resistance to repetitive deformation (e. g. bending, stretching, etc.).

Silicone rubbers have an excellent heat resistance and cold resistance, and as a result are now used in various types of applications. However, because silicone rubbers have a poor resistance to repetitive deformation (e. g., bending, elongation), they are not entirely satisfactory for applications where resistance to repetitive deformation is crucial, for example, keyboards, automotive isokinetic joint boots, etc. Tactics which have already been undertaken in order to improve this resistance include reducing the quantity of filler in the silicone rubber composition in order to increase filler dispersion, and strengthening the filtration effort in order to achieve a maximum removal of foreign material. Nevertheless, these approaches still have not been able to give a silicone rubber composition with a completely satisfactory durability.

Elastomeric organopolysiloxane compositions containing unsaturated alkoxysilanes are taught in U.S. Pat. No. 3,341,489, issued Sept. 12, 1967. These compositions allow the curing of the elastomer without an extended post-cure.

The ability of a silicone rubber composition to resist repetitive deformation is substantially improved by the addition of a small quantity of an organooligosiloxane which contains in each molecule from 2 to 10 silicon atoms, at least 1 silicon-bonded alkenyl group, and at least 2 silicon-bonded hydrolyzable groups wherein the other organic group bonded to silicon is alkyl or phenyl to the silicone rubber composition.

This invention relates to a silicone rubber composition comprising (A) 100 weight parts organopolysiloxane of the general formula $R_aSiO_{(4-a)/2}$ wherein R is a monovalent hydrocarbon group and a is a number with a value of 1.90 to 2.05, (B) 5 to 100 weight parts reinforcing filler, (C) 0.1 to 20 weight parts organooligosiloxane which contains in each molecule from 2 to 10 silicon atoms, at least 1 silicon-bonded alkenyl group, and at least 2 silicon-bonded hydrolyzable groups wherein the other organic group bonded to silicon is alkyl or phenyl, and (D) curing agent in a quantity sufficient to cure the composition according to the present invention.

To explain the preceding in greater detail, the organopolysiloxane comprising component (A) is the principal or base component of the composition according to the present invention. R in the preceding formula encompasses substituted and unsubstituted monovalent hydrocarbon groups, and is exemplified by alkyl groups such as methyl, ethyl, propyl, and butyl; alkenyl groups such as vinyl and allyl; aryl groups such as phenyl and tolyl; cycloalkyl groups such as cyclohexyl; and groups obtained by replacing all or part of the hydrogen in the preceding groups with halogen or the cyano group and so forth, e. g., chloromethyl, trifluoropropyl, and cyanomethyl. The subscript a is to have a value of 1.90 to 2.05. This organopolysiloxane is exemplified as follows:
trimethylsiloxy-terminated methylvinylpolysiloxanes, trimethylsiloxy-terminated methylvinylsiloxane-dimethylsiloxane copolymers, dimethylvinylsiloxy-terminated dimethylsiloxane-methylphenylsiloxane copolymers, dimethylvinylsiloxy-terminated dimethylsiloxane-diphenylsiloxane copolymers, trimethylsiloxy-terminated dimethylsiloxane-methylphenylsiloxane-methylvinylsiloxane copolymers, dimethylvinylsiloxy-terminated methyl(3,3,3-trifluoropropyl)polysiloxanes, dimethylvinylsiloxy-terminated dimethylsiloxane-methyl(3,3,3-trifluoropropyl)siloxane copolymers, and organopolysiloxanes composed of $CH_2=CH(CH_3)_2SiO_{1/2}$ units, $(CH_3)_3SiO_{1/2}$ units, and $SiO_{4/2}$ units. Component (A) should have a degree of polymerization in the range of 100 to 30,000 and preferably in the range of 1,000 to 20,000. The present invention may also employ combinations of the various organopolysiloxanes described above.

The reinforcing filler comprising component (B) functions to improve the mechanical strength of the silicone rubber moldings obtained by curing the composition according to the present invention. This reinforcing filler is exemplified by precipitated silica, fumed silica, calcined silica, fumed titanium oxide, and the preceding fillers whose surface has been treated with an organosilicon compound such as hexamethyldisilazane, trimethylchlorosilane, or polymethylsiloxane. This component should be added at 5 to 100 weight parts per 100 weight parts component (A).

The organooligosiloxane comprising component (C) is the essential component for imparting resistance to repetitive deformation (e. g., bending, stretching, etc.) to the silicone rubber moldings obtained by curing the composition according to the present invention. The organooligosiloxane contains in each molecule from 2 to 10 silicon atoms, at least 1 silicon-bonded alkenyl group, and at least 2 silicon-bonded hydrolyzable groups, wherein the other organic group bonded to silicon is alkyl or phenyl, Each molecule of this component must contain at least 1 silicon-bonded, aliphatically unsaturated hydrocarbon group and at least 2 silicon-bonded hydrolyzable groups. Said silicon-bonded alkenyl groups are exemplified by vinyl, allyl, and hexenyl. The vinyl group is preferred based on considerations of reactivity and heat resistance. The silicon-bonded hydrolyzable group is exemplified by alkoxy groups such as methoxy and ethoxy and by alkenoxy groups such as propenoxy. Alkoxy groups are preferred based on ease of acquisition and starting

material costs. Other than the silicon-bonded alkenyl groups and the silicon-bonded hydrolyzable groups, the silicon-bonded organic groups present in this component are exemplified by the same substituted and unsubstituted monovalent hydrocarbon groups provided for R in the preceding description of component (A) of the composition according to the present invention. This organooligosiloxane also functions as a plasticizer which reduces the interaction between the polymer component and reinforcing filler in the uncured silicone rubber. For this reason its content of silicon-bonded hydrolyzable groups should be as high as possible.

The organooligosiloxane under consideration can be synthesized by various methods. For example, tetrasiloxane is first prepared by a ring-opening reaction between hexamethylcyclotrisiloxane and dimethylvinylchlorosilane. The silicon-bonded chlorine in this tetrasiloxane is then hydrolyzed to given a silanol-containing tetrasiloxane, and this silanol group is subsequently blocked with tetramethoxysilane. These reaction equations proceed as follows.

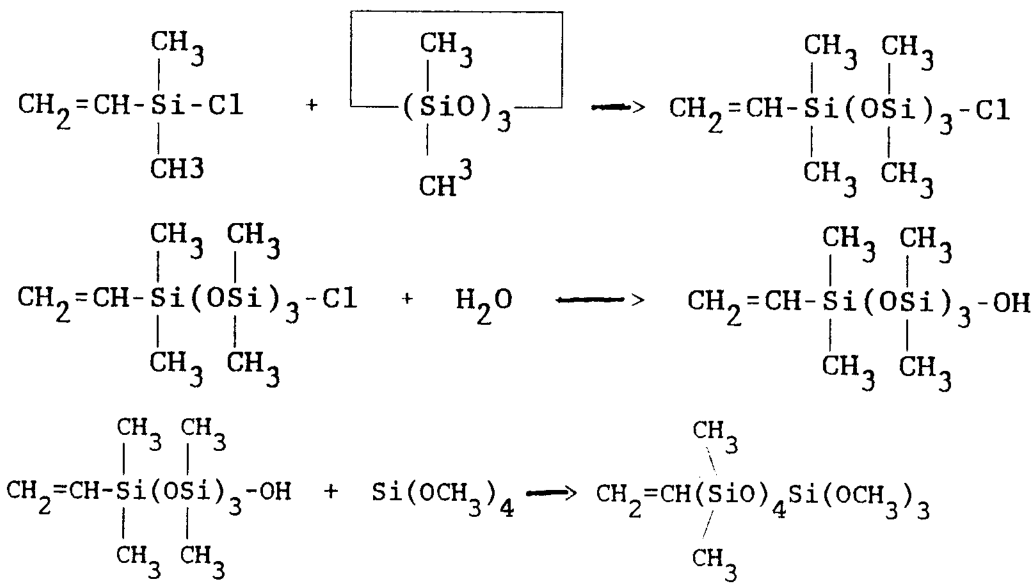

In addition to the preceding method, the present invention can also employ those silicone compounds afforded by the catalyzed or uncatalyzed copolymerization of (a) a silicone compound containing silicon-bonded alkenyl, (b) a silicone compound containing silicon-bonded hydrolyzable groups, and optionally (c) other organosilicone compounds. In more concrete terms, reference is made in this regard to the copolymer prepared by the cohydrolysis of vinylmethyldimethoxysilane and methyltrimethoxysilane and to copolymers from methylvinyl cyclics and alkoxysilanes. In the former case the reaction equation proceeds as follows.

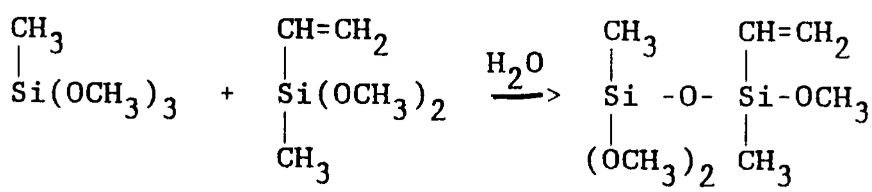


A crucial feature here is that the component (C) employed by the composition of the present invention must comprise an oligosiloxane which contains at least 2 silicon atoms. A monomer such as vinyltrimethoxysilane cannot provide the high-level properties which are the object for the composition according to the present invention. The structure of the component under consideration may be straight chain, branched, or cyclic, while its degree of polymerization should fall within the range of 2 to 30 and preferably within the range of 2 to 10.

Component (D) is a curing agent which functions to cure the composition according to the present invention. Component (D) is typically an organoperoxide, and concrete examples in this regard are dicumyl peroxide, di-tert-butyl peroxide, tert-butyl cumyl peroxide, 2,5-dimethyl-2,5-di(tert-butylperoxy)hexane, 2,5-dimethyl-2,5-di(benzoylperoxy)hexane, 2,5-dimethyl-2,5-di(tert-butylperoxy)-3,3,5-trimethylcyclohexane, benzoyl peroxide, 2,4-dichlorobenzoyl peroxide, and p-chlorobenzoyl peroxide. Component (D) should be

added in a quantity which will lead to a thorough cure of the composition of the present invention. With regard to the aforesaid organoperoxides, their addition customarily falls within the range of 0.1 to 15 weight parts per 100 weight parts component (A).

Component (D) also encompasses another type of curing agent: the combination of platinum catalyst plus organohydrogenpolysiloxane having at least 3 silicon-bonded hydrogen atoms in each molecule. This organohydrogenpolysiloxane having at least 3 silicon-bonded hydrogen atoms is exemplified by trimethylsiloxy-terminated dimethylsiloxane-methylhydrogensiloxane copolymers; it should have a degree of polymerization of 3 to 700; and it should be added in a quantity which affords values of (0.5 : 1) to (20 : 1) for the ratio between the total number of moles of silicon-bonded hydrogen atoms in component (D) and the total number of moles of alkenyl groups in component (A). This type of curing agent includes the co-use of a platinum catalyst as an addition reaction-accelerating catalyst. Said platinum catalyst is exemplified by chloroplatinic acid and its solutions in alcohol, ketone, or ether; chloroplatinic acid-olefin complexes; chloroplatinic acid-alkenylsiloxane complexes; platinum black; and platinum supported on a carrier. The platinum catalyst should be added to give 0.1 to 500 weight parts as platinum for each 1,000,000 weight parts of the total quantity of components (A) plus (D). In order to secure a suitable working time, a known curing retarder may be added along with the curing agent under consideration, and examples in this regard are acetylenic compounds, hydrazine compounds, triazole compounds, phosphine compounds, and mercaptan compounds.

The composition according to the present invention is produced simply by mixing the aforementioned components (A) through (D) to homogeneity. Moreover, those additives known for use with silicone rubbers may be added on an optional basis, and examples here are extender fillers such as powdered quartz, diatomaceous earth, asbestos, calcium carbonate, and aluminosilicic acid; as well as heat stabilizers and flame retardants such as iron oxide, cerium oxide, aluminum oxide, zinc oxide, and manganese carbonate.

The following examples are included for illustrative purposes only and should not be construed as limiting the invention which is properly set forth in the appended claims. All parts are parts by weight. The constant elongation fatigue resistance referenced in the examples was measured as follows.

To obtain the test specimen from the silicone rubber sheet, a number 3 dumbbell as stipulated in JIS K 6301 was punched from the 2 mm-thick silicone rubber sheet. This test specimen was installed in a De Mattia tester as specified in Section 15 of JIS K 6301 and was stretched and relaxed at 300 +or- 10 cycles/minute wherein the maximum distance between the indicator lines was 40 mm and the minimum distance between the indicator lines was 20 mm. The numerical value reported for the constant elongation fatigue resistance is the number of cycles (1 cycle equals 1 back-and-forth motion) to failure of the test specimen. In this measurement configuration, the test specimen held between the clamps was repetitively elongated over a draw ratio of 0 to 100 percent.

Reference Example 1

First 216.5 parts dimethylvinylchlorosilane, 400 parts hexamethylcyclotrisiloxane, 12.4 parts dimethylformamide, and 123.4 parts acetonitrile were placed in a stirrer-equipped four-neck flask and were reacted by stirring for 1 hour at room temperature. After completion of the reaction, 222 parts tetrasiloxane with the following chemical structural formula was recovered by distillation in vacuo.

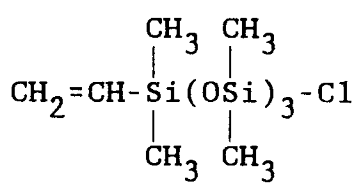

Then 1,000 parts water, 1,000 parts ice, 500 parts diethyl ether, and 66.1 parts sodium bicarbonate were subsequently placed in a stirrer-equipped four-neck flask and cooled to 0 °C. Next 200 parts of the preceding tetrasiloxane was dissolved in 200 parts diethyl ether, and a reaction was run by dripping in this solution with stirring. After completion of the reaction, the ether layer was separated off and washed with water. Next 186.8 parts tetrasiloxane with the following chemical structural formula was obtained by removal of the ether in vacuo at room temperature.

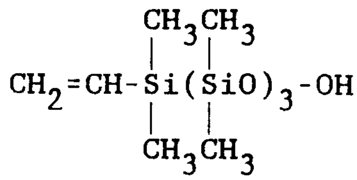

Next 186.3 parts of this tetrasiloxane, 262 parts tetramethoxysilane, and 0.0354 parts propionic acid were introduced into a four-neck flask equipped with a stirrer and distillation set-up and were heated to 130 °C. A mixture of tetramethoxysilane and methanol by-product was removed from the reaction system by distillation, and fresh tetramethoxysilane was then supplied. The course of the reaction was monitored by gas chromatography: the process was repeated until the tetrasiloxane peak had disappeared. The total quantity of tetramethoxysilane used was approximately 700 parts. After the completion of the reaction, the fraction at 88 to 91 °C/l mmHg was collected by distillation in vacuo to afford 198.7 parts reaction product. The reaction product was confirmed to be the pentasiloxane with the following chemical structural formula based on the results of nuclear magnetic resonance and infrared spectroscopic analyses.

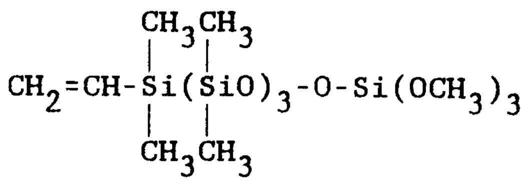

Silicone Compound I

Reference Example 2

First 86 parts methylvinylcyclotetrasiloxane, 136 parts methyltrimethoxysilane, and 0.112 parts potassium hydroxide were placed in a 500 mL four-neck flask equipped with stirrer, reflux condenser, thermometer, and nitrogen inlet tube. This was followed by gradual heating to 110 °C and then reaction for approximately 2 hours under reflux. After completion of the reaction, the potassium hydroxide catalyst was neutralized with acid and the salt produced thereby was removed by filtration. Based on the results of GLC analysis, the obtained condensation product was confirmed to be a mixture of at least 9 components. The measured content of silicon-bonded vinyl groups indicated the following average structural formula.

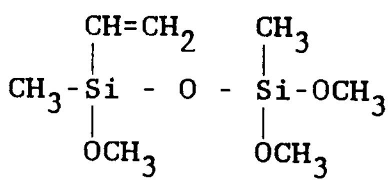

Silicone Compound IV

Example 1

First 100 parts organopolysiloxane with average degree of polymerization of 7,000 (99.82 mole percent dimethylsiloxy units and 0.18 mole percent methylvinylsiloxy units), 25 parts dry-method silica with specific surface area of 300 m2/g, and silicone compound I from Reference Example 1 (quantity reported in Table 1) were mixed and kneaded in a kneader mixer. Subsequent heat treatment at 170 °C for 1 hour gave a silicone rubber base. Then 0.7 parts 2,5-dimethyl-2,5-di(tert-butylperoxy)hexane was mixed to homogeneity into 100 parts of each silicone rubber base to give a silicone rubber composition. This composition was press-molded for 10 minutes at 170 °C/20 kg/cm2 to give a 2 mm-thick silicone rubber sheet. This sheet was then held for 4 hours in a forced convection oven at 200 °C. A dumbbell for evaluation testing was made from the resulting sheet, and the fatigue at a constant 100 percent elongation was measured using the De Mattia fatigue tester. Its physical properties were also measured. These results are reported in Table 1.

For comparison, a silicone rubber composition was prepared as above, but in the present case using vinyltrimethoxysilane (silicone compound II) or silanol-terminated dimethylpolysiloxane with viscosity of 40

centistokes at 25 °C (silicone compound III) in place of silicone compound I. Silicone rubber sheets were obtained from these compositions by the same method as above, and these sheets were subjected to measurement of their physical properties and constant elongation fatigue resistance as above. These measurement results are also reported in Table 1 as Comparison Example 1. The obtained results show that the silicone rubber compositions according to the present invention had a better constant elongation fatigue resistance than the silicone rubber compositions according to Comparison Example 1.

Table 1

| | Experiment Number | | | | | |
|---|---|---|---|---|---|---|
| | Example 1 | | | | Comparison Example 1 | |
| | A | B | C | D | E | F |
| silicone compound addition (see note 1) | | | | | | |
| silicone I | 1.5 | 3.0 | 0.0 | 0.0 | 0.0 | 0.0 |
| silicone II | 0.0 | 0.0 | 1.5 | 3.0 | 0.0 | 0.0 |
| silicone III | 0.0 | 0.0 | 0.0 | 0.0 | 3.0 | 0.0 |
| physical properties | | | | | | |
| hardness (JIS A) | 46 | 47 | 50 | 51 | 45 | 51 |
| tensile strength (kgf/cm2) | 77 | 82 | 74 | 70 | 80 | 63 |
| tear strength (kgf/cm) | 14.5 | 11.6 | 10.3 | 8.5 | 13 | 9.6 |
| elongation (%) | 318 | 347 | 282 | 251 | 385 | 255 |
| constant elongation fatigue testing | | | | | | |
| cycles to failure (x 104) | 422 | 383 | 193 | 185 | 97 | 80 |

Note 1. Given in weight parts per 100 parts of the organopolysiloxane with average degree of polymerization of 7,000

Example 2

First 100 parts organopolysiloxane of Example 1, 40 parts wet-method silica with specific surface area of 200 m2/g, and silicone compound I from Reference Example 1 (quantity reported in Table 2) were blended and then mixed and kneaded in a kneader mixer. This was followed by heating at 170 °C for 1.5 hours to give a silicone rubber base. Then 0.6 parts 2,5-dimethyl-2,5-di(tert-butylperoxy)hexane was mixed to homogeneity into 100 parts of this silicone rubber base to give a silicone rubber composition. This composition was press-molded for 10 minutes at 170 °C/20 kg/cm2 to afford a 2 mm-thick silicone rubber sheet. This sheet was then held for 4 hours in a forced convection oven at 200 °C. A dumbbell for evaluation testing was prepared from the resulting silicone rubber sheet, and the fatigue at a constant 100 percent elongation was measured as in Example 1. These results are reported in Table 2.

For comparison, a silicone rubber composition was prepared as above, but in the present case adding

the silicone III employed for composition preparation in Comparison Example 1 in place of silicone I. A silicone rubber composition was also prepared as above, but in this case omitting both silicone I and silicone III. These silicone rubber compositions were evaluated as above, and these measurement results are also reported in Table 2. The obtained measurement results demonstrate that the silicone rubber compositions according to the present invention had a better constant elongation fatigue resistance than the silicone rubber compositions according to Comparison Example 2.

Table 2

| | Experiment Number | | | |
|---|---|---|---|---|
| | Example 2 | | Comparison Example 2 | |
| | E | F | I | J |
| silicone compound addition (see note 1) | | | | |
| silicone I | 1.2 | 2.0 | 0.0 | 0.0 |
| silicone III | 0.0 | 0.0 | 2.0 | 0.0 |
| physical properties | | | | |
| hardness (JIS A) | 48 | 49 | 47 | 53 |
| tensile strength (kgf/cm2) | 76 | 80 | 79 | 66 |
| tear strength (kgf/cm) | 10 | 7.9 | 8.0 | 6.1 |
| elongation (%) | 324 | 330 | 348 | 260 |
| constant elongation fatigue testing | | | | |
| cycles to failure (x 104) | 180 | 145 | 54 | 32 |

Note 1. Given in weight parts per 100 parts of the organopolysiloxane with average degree of polymerization of 7,000

Example 3

First 100 parts organopolysiloxane of Example 1, 25 parts dry-method silica with specific surface area of 300 m2/g, and silicone compound IV from Reference Example 2 (quantity reported in Table 3) were mixed and kneaded in a kneader mixer. Subsequent heat treatment at 170 °C for 1 hour gave a silicone rubber base. The following were mixed to homogeneity on a two-roll mill into 100 parts of this silicone rubber base to give a silicone rubber composition: 0.5 parts dimethylsiloxane-methylhydrogensiloxane copolymer (viscosity of 5 centistokes at 25 °C, Si-bonded hydrogen content of 0.8 weight percent), and 0.06 parts monomethyltris(monomethylbutynoxy)silane, and chloroplatinic acid/tetramethylvinyldisiloxane complex in a quantity sufficient to give 15 ppm platinum based on the overall weight. This composition was press-molded for 5 minutes at 150 °C/20 kg/cm2 to give a 2 mm-thick silicone rubber sheet. A dumbbell for evaluation testing was made from the resulting silicone rubber sheet, and the constant elongation fatigue resistance and physical properties were measured as in Example 1. These measurement results are reported in Table 3.

For comparison, a silicone rubber composition was prepared as above, but in this case adding the silicone III used for composition preparation in Comparison Example 1 in place of silicone IV. In addition, a silicone rubber composition was prepared as above, but in this case omitting both silicone IV and silicone III. The properties of these silicone rubber compositions were measured as above, and these measurement results are also reported in Table 3. The obtained measurement results reveal that silicone rubbers obtained by curing a composition according to the present invention could withstand over 2,500,000 elongations and that the compositions according to the present invention generated a better constant elongation fatigue

resistance than the silicone rubber compositions according to Comparison Example 3.

Table 3

| | Experiment Number | | | |
|---|---|---|---|---|
| | Example 3 | | Comparison Example 3 | |
| | I | J | K | L |
| silicone compound addition (see note 1) | | | | |
| silicone IV | 1.2 | 2.5 | 0.0 | 0.0 |
| silicone III | 0.0 | 0.0 | 2.5 | 0.0 |
| physical properties | | | | |
| hardness (JIS A) | 43 | 45 | 43 | 49 |
| tensile strength (kgf/cm2) | 82 | 80 | 79 | 63 |
| tear strength (kgf/cm) | 15.1 | 13.0 | 13.6 | 9.1 |
| elongation (%) | 428 | 390 | 440 | 291 |
| constant elongation fatigue testing | | | | |
| cycles to failure (x 104) | 361 | 306 | 109 | 70 |

Note 1. Given in weight parts per 100 parts of the organopolysiloxane with average degree of polymerization = 7,000

## Claims

**1.** Silicone rubber composition comprising
(A) 100 weight parts organopolysiloxane of the general formula

$R_aSiO_{(4-a)/2}$

wherein R is a monovalent hydrocarbon group and a is a number with a value of 1.90 to 2.05,
(B) 5 to 100 weight parts reinforcing filler,
(C) 0.1 to 20 weight parts organooligosiloxane which contains in each molecule from 2 to 10 silicon atoms, at least 1 silicon-bonded alkenyl group, and at least 2 silicon-bonded hydrolyzable groups, wherein the other organic group bonded to silicon is alkyl or phenyl, and
(D) curing agent in a quantity sufficient to cure the composition according to the present invention.

**2.** Silicone rubber composition consisting essentially of
(A) 100 weight parts organopolysiloxane of the general formula

$R_aSiO_{(4-a)/2}$

wherein R is a monovalent hydrocarbon group and a is a number with a value of 1.90 to 2.05,
(B) 5 to 100 weight parts reinforcing filler,
(C) 0.1 to 20 weight parts organooligosiloxane which contains in each molecule from 2 to 10 silicon atoms, at least 1 silicon-bonded alkenyl group, and at least 2 silicon-bonded hydrolyzable groups, wherein the other organic group bonded to silicon is alkyl or phenyl, and
(D) curing agent in a quantity sufficient to cure the composition according to the present invention.

**3.** The composition of claim 2 in which (C) is

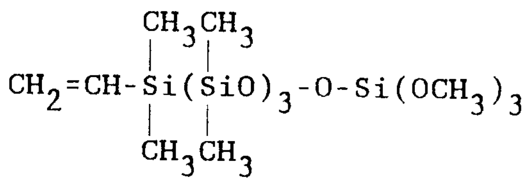

4. The composition of claim 2 in which (C) is

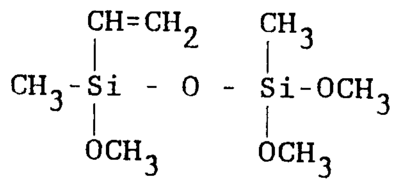

5. The composition of claim 2 in which (D) is an organoperoxide.

6. The composition of claim 2 in which (D) is the combination of platinum catalyst plus organohydrogenpolysiloxane having at least 3 silicon-bonded hydrogen atoms in each molecule.